(19) Europäisches Patentamt / European Patent Office / Office européen des brevets

(11) **EP 2 256 678 A1**

(12) **EUROPEAN PATENT APPLICATION**

(43) Date of publication:
**01.12.2010 Bulletin 2010/48**

(51) Int Cl.:
***G06Q 10/00*** *(2006.01)*

(21) Application number: **09007119.2**

(22) Date of filing: **28.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **OCCAR; Organisation Conjointe de Cooperation en matiere d'ARmement 53175 Bonn (DE)**

(72) Inventor: **Aliberti, Carlo 00152 Rome (IT)**

(54) **Method, system and computer-readable medium for predicting the operational availability of a weapon system**

(57) A computer implemented method predicts the operational availability of a certain, complex weapon system in the in service support phase. Formulas are used regarding
• MMT (Mean Maintenance Time),
• MLDT (Mean Logistic Down Time) and
• MTBF (Mean Time Between Failures).

The operational availability at a future point in time is calculated through the usage of reliability, maintainability and supportability parameters P1, P2, P3, P4, P5, P6 and P7, whereby
• P1 is a Configuration Management performance parameter,
• P2 is a Technical Events-Monitoring performance parameter,
• P3 is a Supply chain performance parameter,
• P4 is a Maintenance activities performance parameter,
• P5 is a Technical Documentation Management performance parameter,
• P6 is a Obsolescence Management performance parameter,
• P7 is a Training activities performance parameter.

Each performance-parameter varies over time during the in service support phase of the weapon system and is linked to the real support environment in which the weapon system has to operate,
whereby
• MMT is a function of at least P4, P5 and P7,
• MLDT is a function of at least P1, P3 and P6,
• MTBF is a function of at least P2, P4, P5 and P7.

<u>Fig. 1a</u>

$$A_0 = \frac{MTBM}{MTBM + MDT}$$

$$MTBM = \frac{1}{\frac{1}{MTBF} + \frac{1}{MTBPM}} \qquad MDT = MLDT + MMT$$

| Performance-Parameter | MTBF | MLDT | MMT |
|---|---|---|---|
| $P_1$ (Configuration) | | X | |
| $P_2$ (Technical Event) | X | | |
| $P_3$ (Supply Chain) | | X | |
| $P_4$ (Maintenance) | X | | X |
| $P_5$ (Documentation) | X | | X |
| $P_6$ (Obsolescence) | | X | |
| $P_7$ (Training) | X | | X |

EP 2 256 678 A1

## Description

The invention relates to method, system and computer-readable medium for predicting the operational availability of a single specified, complex weapon system in consideration of the support environment in which the weapon system has to operate during the in service phase. The prediction of the operational availability is done at the level of the weapon system and not at component level. By doing so, each measure and/or metric utilised in the invention is referring to the system level; the process for combining these values from component level is considered state of art.

For the owner of a system, the ownership value is defined by the ability to actually use the system. The most common term for this value is system availability, or the probability that a system will be ready to perform its missions or functions under the stated conditions when called upon to do so at a random time. This concept can be compared to owning a car. Simply having a car does not give sufficient value to the owner unless the car provides some form of transportation when required. For example if a person owns a car, but the car is not working due to some failure, or if there is no fuel, or spares for a repair, the car is not available and the owner cannot use the car. It is only when the car is available for use that the owner has some sense of value in ownership. The same holds true for any weapon system.

In this application the term weapon system means for example a tank, a combat helicopter, military plane or a ship. A single specified, complex weapon system stands for example for one particular tank or combat helicopter with its own history of upgrading and maintenance. The term operational availability is used in the logistic field when a realistic support environment and all maintenance actions are considered in addition to the system.

A publication (Operational Availability Handbook, Publication Date: 05/15/2004 SRC-HDBK-3180, ISBN 0-9712853-9-X) discloses the features of the preamble of claim 1.

The disadvantage of the known method is that the calculation of the operational availability is done without defining any kind of relationship with reliability, maintainability and supportability performance parameters. Therefore the metrics which influence the operational availability like MMT, MLDT or MTBM, do not consider the above mentioned reliability, maintainability and supportability performance parameters, which are linked with the weapon system life cycle and the real support environment.

US 2008/0082230 A1 discloses a computer-implemented method for calculating the operational availability of an aircraft. The method allows the designer of the aircraft (0010) to input values and to predict their effect on operational availability. The effects of usage rate, repair concurrency and non-mission capable-supply rates are combined.

US 2005/0177353 A1 discloses a method of discrete event simulation which calculates a time-based prediction of weapons availability, maintenance activities and spare parts stock over a life cycle of the weapon system (from abstract).

US 2007/0035901 A1 (EP 1 959 325 A2) discloses a computer-implemented method for calculating the mean time period between two failures of a technical system like an assembly system for motor vehicle components. The method uses a list of maintenance-intensive components. Every failure of a component of the list leads to a failure of the system. The method calculates the planned MTBF of the technical system as a function of the set point MTBF values of the components. The scope does not include operational availability calculation.

EP 1 160 712 A2 discloses a computer-implemented method for calculating the timing of future service events of a product like an aircraft engine. For this a database is used. The database contains a plurality of service information and performance information for the product. Part of the method is to determine a plurality of compartment failure information and to analyse the rate of the performance deterioration. The calculation of the operational availability is not included because the method is primarily applicable for the component level and not the system-level.

Further, beside the operational availability, there are the following known concepts:

- Learning process, known as learning curve or Ebbinghaus curve. The learning curve effect states that the more times a task has been performed, the less time will be required on each subsequent iteration.
- Electronic part life cycle, known as obsolescence forecasting or obsolescence curve. An electronic part becomes obsolete when it is no longer manufactured, either because demand has dropped to low enough levels that it is not practical for manufacturers to continue to make it, or because the materials or technologies necessary to produce it are no longer available.
- Failure rate or reliability improvement for continuously operating units, known as Duane-Model-curve, from the field of reliability growth.

The object of the invention is to provide a method, a system and a computer-readable medium for predicting the operational availability of a single specified, complex weapon system at any future point in time during the in service support phase.

The object is achieved by means of a method as claimed in claim 1.

The computer implemented method for predicting the operational availability of a certain complex weapon system during the in service support phase, comprises a step that consists of predicting the operational availability as function of reliability, maintainability and supportability, with the following formula:

$$A_o = \frac{MTBM}{MTBM + MDT}$$

whereby

$A_o$ = Operational Availability,

MTBM = Mean Time Between Maintenance, including all corrective and preventive maintenances,

MDT = Mean Down Time, which is the actual time to perform maintenance and, in addition, any delay in getting the required personnel, parts, and/or number of spares on hand,

whereby

MDT = MLDT + MMT

whereby

MMT = Mean Maintenance Time,

MLDT = Mean Logistic Down Time,

whereby

$$MTBM = \frac{1}{(1/MTBF) + (1/MTBPM)}$$

MTBF = Mean Time Between Failures,

MTBPM = Mean Time Between Preventive Maintenance.

The operational availability at a future point in time is calculated through the usage of reliability, maintainability and supportability performance parameters P1, P2, P3, P4, P5, P6 and P7.

By this invention it is possible to foresee the correct value of achievable operational availability due to the influence of each reliability, maintainability and supportability performance parameter P1 to P7.

Through the definition and use of these parameters P1 to P7 it is possible to set up the best combination of performances of the support activities in order to get the desired value of operational availability. The support activities constitute the support environment and their performances, linked to reliability, maintainability and supportability, can be measured through the parameters P1 to P7.

The effects of changing one or more reliability, maintainability and supportability parameters result in accurate and reliable values of achievable operational availability for the system. • P1 is a Performance parameter for Configuration management activities.

This parameter measures the level of effectiveness of all activities and tasks to be performed in order to have the correct configuration of the system every time. In case of a lack of, or sub-optimal management of these activities or tasks, this parameter is able to quantify and foresee the impact on the achievable MLDT value and consequently on system operational availability. The hitches can be linked to identification, accounting, audit and control activities which are part of the support environment. • P2 is Performance parameter for Technical Event-Monitoring activities.

This parameter measures the level of effectiveness of all activities and tasks to be performed in order to collect and study technical data related to the system utilization, to analyse the failures and their causes and to define possible solutions. In case of a lack of, or sub-optimal management of these activities or tasks, this parameter is able to quantify and foresee the impact on MTBF and consequently on system operational availability. The hitches can be linked to technical events management, technical data accounting or post design activities which are part of the support environment.

• P3 is a Performance parameter for the Supply chain activities.

This parameter measures the level of effectiveness for all activities and tasks linked to the supply chain organization, for example, spares availability, repairs, transportation, administrative time, efficiency and responsiveness of the support system. In case of a lack of, or sub-optimal management of these activities or tasks, this parameter is able to quantify and foresee the impact on MLDT and consequently on system operational availability. The hitches can be linked to the determination of requirements, material provisioning and acquisition, repair administration and packaging-handling-storage-transportation activities which are part of the support environment.

• P4 is a Performance parameter for the Maintenance activities.

This parameter measures the level of effectiveness for all activities and tasks needed for corrective and preventive maintenance and, broadly speaking, maintainability aspects. In case of a lack of, or sub-optimal management of these activities or tasks, this parameter is able to quantify and foresee the impact on MMT, MTBF and further system operational availability. The hitches can be linked to maintenance planning, maintenance execution and maintenance monitor and control which are part of the support environment.

> • P5 is a Performance parameter for Technical Documentation management.

This parameter measures the level of effectiveness for all activities and tasks needed to develop supportive technical documentation and ensure such documentation is correctively updated. In case of a lack of, or sub-optimal management of these activities or tasks, this parameter is able to quantify and foresee the impact on MMT, MTBF and consequently on system operational availability. The hitches can be linked to the data development process, documentation development process, documentation management, revision and maintenance which are part of the support environment.

> • P6 is an Obsolescence performance parameter.

This parameter measures the level of effectiveness for all activities and tasks to be performed in order to monitor, avoid and/or solve item obsolescence issues. In case of a lack of, or sub-optimal management of these activities or tasks, this parameter is able to quantify and foresee the impact on MLDT, and consequently on system operational availability. The hitches can be linked to obsolescence identification, accounting and resolution processes which are part of the support environment.

> • P7 is a Training activities performance parameter.

This parameter measures the level of effectiveness for all activities and tasks to be performed in order to develop, implement and monitor supportive training aiming at providing the right skill for maintainers. In case of a lack of, or sub-optimal management of these activities or tasks, this parameter is able to quantify and foresee the impact on MMT, MTBF, and consequently on system operational availability. The hitches can be linked to objectives identification process, training gap management, training procurement and implementation processes which are part of the support environment.

Each performance-parameter varies over time during the in service support of the weapon system and is linked to the real support environment in which the weapon system has to operate. These parameters can assume continuous values between 1 (optimal) to 0 (worst case).

- MMT is a function of at least P4, P5 and P7. The value of MMT takes into account the influence of maintainability aspects, supportive technical documentation reliability and training management activities on practical maintenance activities. Through the usage of these parameters, it is possible to set up the best combination of the performance parameters associated to the above-mentioned support activities that allows a reduction in the MMT and consequently a better value of operational availability. It means that each task of these support activities can be measured in terms of impact on MMT or on system operational availability. This, for example, could be useful in order to assess the cost of an improvement on system operational availability by an analysis of different possible modifications within maintainability aspects, technical documentation and training management activities as part of support environment.

- MLDT is a function of at least P1, P3 and P6. The value of the MLDT takes into account the influence of the weapon system configuration management, the supply chain management and the ability on obsolescence resolution or prevention on logistic activities. Through the usage of these parameters it is possible to set up the best combination of the performances associated to the above-mentioned support activities that allows a reduction of the MLDT and consequently a better value of operational availability. It means that each task of these support activities can be measured in terms of impact on MLDT or on system operational availability. Also in this case when the user is able to quantify the costs for enhancing one or more of these activities according to the best parameters value, the user can assess the cost of the corresponding improvement on system operational availability.

- MTBF is a function of at least P2, P4, P5 and P7. The value of MTBF takes into account the influence of technical events management, maintainability aspects, supportive technical documentation reliability and training management activities have on weapon system reliability. Through the usage of these parameters it is possible to set up the best combination of the performances associated to the above-mentioned support activities that allows an increment in the MTBF and consequently a better value of operational availability. The same example described previously on cost evaluation also applies in this case.

In an advantageous embodiment of the invention, the MTBF is also a function, which comprises the Duane-Model-curve or reliability growth, under consideration of at least one real measured MTBF-value at a past point in time. The MTBF, that is often used to express the system reliability, is an important factor in availability evaluation. The reliability is defined as the probability that an item will not fail to perform its functions when used under stated conditions over a defined time period and it is linked with the time period for which it is calculated. Following the state of art, the reliability value is a function based on the actual physical components in the design and environmental conditions. Hereby it is stated that the reliability value or MTBF, considered for the operational availability prediction, has to take into account the improvement due to usage of the complex weapon system, according to the actual reliability growth curve (Duane Model). Starting from the initial value of MTBF, calculated utilising the state of art, the actual reliability growth curve could be identified through the measurement of a real MTBF value at a past point in time. Furthermore, this improvement of reliability is also linked to the real support environment through the parameters P4, P5 and P7 that influence the trend of the actual reliability growth curve. Optimising these parameters means to make the reliability growth closer to the Duane Model Curve and consequently the weapon system operational availability.

In an advantageous embodiment of the invention, MLDT is also a function, which considers the components life cycle or probability of obsolescence, concerning mainly electronic items in every time segment within the in service time, in which the weapon system is upgraded. The efficiency and responsiveness of the supply support chain is often measured through the MLDT. This factor accounts for any delay in getting the required personnel, parts, and/or number of spares on hand, etc. Hereby it is stated that this factor has to be considered as strongly influenced by the life cycle of electronic components on the weapon system configuration and cannot be constant but rather linked to the time from the last weapon system upgrade. Furthermore, this value of MLDT is linked to the parameters P1, P3 and P6. Optimising these parameters means to optimise the system sustainability and, consequently, the system operational availability.

In an advantageous embodiment of the invention, MMT is also a function, which comprises the learning curve under consideration of at least one real measured MMT-value at a past point in time. The maintainability is often defined as the relative ease and economy of time and resources with which an item can be retained, or restored to, a specific condition when maintenance is performed by personnel having specific skill levels, using prescribed procedures and resources at each prescribed level of maintenance and repair. In this context it is a function of design. On the evaluation of the system operational availability the MMT expresses part of the maintainability aspects. Hereby it is stated that this factor, considered for the operational availability prediction, has to take into account the improvement due to the learning process of the maintainer and also the support environment specific to the weapon system. Starting from the initial statistical value of MMT, calculated during the design phase utilising the state of art, the actual learning rate could be derived from the measurement of a real MMT value at a past point in time. This will allow the prediction of the value of MMT achievable for each future point in time, following the actual learning curve. Furthermore this improvement of MMT is linked to the real support environment through the parameters P4, P5 and P7 that influence the rate of the actual learning curve. Optimising these parameters means to optimise the learning curve, to decrease the maintenance time and, consequently, the system operational availability.

An embodiment of the invention will now be described, by way of example, with reference to the attached drawings, in which:

Fig. 1 shows operational availability curves during an in service support phase and names relevant performance parameters;

Fig. 1a shows some basic equations and a chart depicting which factor of the equations is influenced by which performance parameter;

Fig. 2 shows MTBF curves during the in service support phase, the basic formula of MTBF and its links with performance parameters;

Fig. 3 shows MLDT curves during the in service support phase, the basic formula of MLDT and its links with performance parameters;

Fig. 4 shows MMT curves during the in service support phase, the basic formula of MMT and its links with performance parameters.

General discussion of the computer implemented method

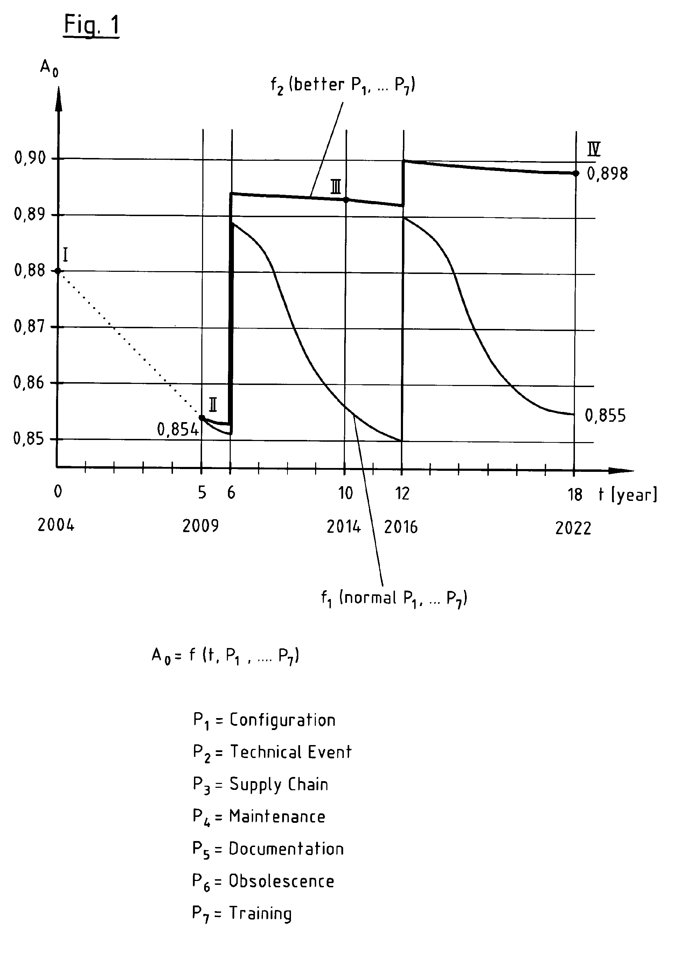

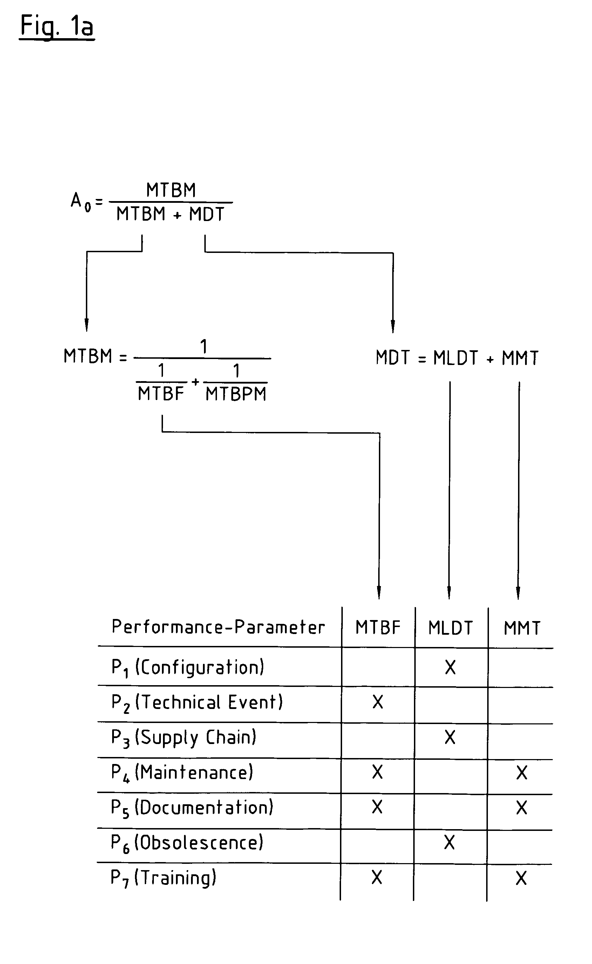

Fig. 1 and Fig. 1a illustrate a computer-implemented method for predicting the operational availability of a certain, complex weapon system in the service support phase. In this embodiment the weapon system is a tank.

The method comprises the step of predicting the operational availability as a function of reliability, maintainability and supportability, with the following formula:

$$A_o = \frac{MTBM}{MTBM + MDT}$$

whereby
$A_o$ = Operational Availability
MTBM = Mean Time Between Maintenance, including all corrective and preventive maintenance,
MDT = Mean Down Time, which is the actual time to perform maintenance and, in addition, accounts for any delay in getting the required personnel, parts and/or number of spares on hand,
whereby
MDT = MLDT + MMT
whereby
MMT = Mean Maintenance Time,
MLDT = Mean Logistic Down Time,
wherebv

$$MTB\overset{\cdot}{M} = \frac{1}{(1/MTBF) + (1/MTBPM)}$$

whereby
MTBF = Mean Time Between Failures
MTBPM = Mean Time Between Preventive Maintenance
The operational availability at a future point in time is calculated through the usage of maintainability and supportability parameters P1, P2, P3, P4, P5, P6 and P7, whereby

- P1 is a Configuration Management performance parameter,
- P2 is a Technical Events-Monitoring performance parameter,
- P3 is a Supply chain performance parameter,
- P4 is a Maintenance activities performance parameter,
- P5 is a Technical Documentation Management performance parameter,
- P6 is a Obsolescence Management performance parameter,
- P7 is a Training activities performance parameter.

Each performance-parameter varies over time during the in service support phase of the tank and each performance-parameter is linked to the real support environment in which the tank has to operate.
In order to simplify the mathematical formulas each performance parameter is built by assuming values from 1, this means optimal, to 0, the worst case.
Fig. 1a illustrates beside the basic equations that

- MTBF is a function of the performance parameters P2, P4, P5 and P7,
- MLDT is a function of the performance parameters P1, P3 and P6,
- MMT is a function of the performance parameters P4, P5 and P7.

This knowledge will allow drawing of the operational availability curve during the in service phase in the future.
Using the computer implemented method during the in service phase of the tank, the user is able to set up a better value for the performance parameters and consequently to modify some activities of the support environment in order to obtain the requested system operational availability for a defined period of time in the future. Based also on other kind of evaluations, for example, concerning the costs, it is possible to select which support activities have to be changed. For instance, the number of accounting errors on Configuration Management or the number of discrepancy reports on Obsolescence Management may be reduced while leaving the remaining support environment unchanged. It is possible to identify the potential areas of improvement within the support activities through the usage of the parameters P1 to P7 and their links with the terms on the availability formula. The user is able to set up the best combination of performance parameters in terms of effectiveness to obtain the required system operational availability. In other words, the user is able to set up the best support environment solutions.

If the in service support activities are managed in a normal way, the system availability is upheld. If not properly managed, the achievable level of system operational availability is reduced. The level of effectiveness on support activities management is measured through the performance parameters P1 to P7.

<u>Detailed embodiment, illustrating a change of support activities characterized from normal performance parameter to better ones</u>

The user of a complex weapon system, in this case a tank, is supported by a realistic support environment into the areas of Configuration Management, Technical Event-Monitoring, Supply chain, Maintenance activities, Documentation, Obsolescence, Training activities.

To show this first example, Fig 1, Fig. 2, Fig. 3 and Fig 4 has the following points:

I 2004, start of the in service phase.
II 2009, today. In a simplified way, this is also the moment of the real measurement of the actual operational availability-value, the MTBF-value, the MMT-value and all performance parameters.
III 2014, future point in time, at which the required values of operational availability should be obtained.
IV 2022 end of in service phase.

Further, Fig. 1, Fig. 2, Fig. 3 and Fig. 4 show two functions:

- f1, starting in 2009 or at point II, is a function of support activities characterized by normal value of performance parameters;
- f2, starting in 2009 or at point II, is a function of improved support activities characterized by better values of performance parameters.

In order to simplify the example, firstly the change of the support environment is considered immediate at point II. Secondly the MTBPM-value is considered equal to infinity. This assumption does not consider the preventive maintenance.

In the year 2004, the in service phase of the tank started with its own production number.

Fig. 1 shows at point I, that the tank has been designed and built in order to get an operational availability equal to 0,88. In the design and development phase this value of availability is calculated by the usage of the equations as described in Fig. 1a. The theoretical metrics for reliability, maintainability and supportability are the basis. MTBF, MLDT and MMT are not yet linked to the performance parameters.

We are now in the year 2009 at point II and we are able to measure the system operational availability which has been actually achieved. The value is 0,85. This value is different from the theoretical one in point I. The reason therefore lies in the real support environment in which the system has been operating.

With measured operational availability and with measured performance parameters P1 to P7 at point II, it is possible to draw the function f1 through the usage of the equations in Fig. 1a.

The discontinuity points in the years 2010 and 2016 are related to the periods in which the weapon system is upgraded. In this example every period is 6 years long. Later on, with regard to the discussion of MLDT, the reason for the discontinuity points will be explained.

Under the stated conditions the performance parameters P1 to P7 are equal to 0,5 corresponding to normal support environment conditions. The value of the system operational availability decreases from 0,88 at point I to 0,855 at the end of the in service phase in the year 2022.

The user of the weapon system decides now in 2009 to improve the tank operational availability from the actual value of 0,85 to a required value of 0,893 for the year 2014. See point III.

This could be a common situation when a user gets a normal support environment for the specific weapon system. As it is impracticable to introduce any kind of change to the existing tank, the enhancement of operational availability is only possible through an improvement in the support environment.

By the application of the computer implemented method it is possible to select the modification of the support activities that can grant the most effective and quickest change on system operational availability in order to ensure a better value.

The user of the tank wants firstly to know how the performance parameters and the corresponding support activities have to be improved to reach the goal of obtaining an operational availability equal to 0,89 in the year 2014. See point III. The user can get the answer by using the computer implemented method.

The user wants secondly to know the value of the operational availability at the end of the in service period, if the improved performance parameters withstand from the year 2009 until the year 2022. The user will obtain the answer through the calculated f2-curve in Fig. 1.

The improvement of the performance parameters P1 to P7 from normal to better values, starting from 2009 at point II signifies to pass from the f1-curve to an f2-curve. The f2-curves represent the new trend for the operational availability obtained with a better support environment or support services activities. Following the f2- operational availability-curve signifies to obtain the required value of 0,893 in 2014 (point III) and the final value of 0,898 in 2022 (point IV).

After discussing the f1- and f2-operational availability-curves, corresponding MBTF-, MLDT-and MMT-curves are explained.

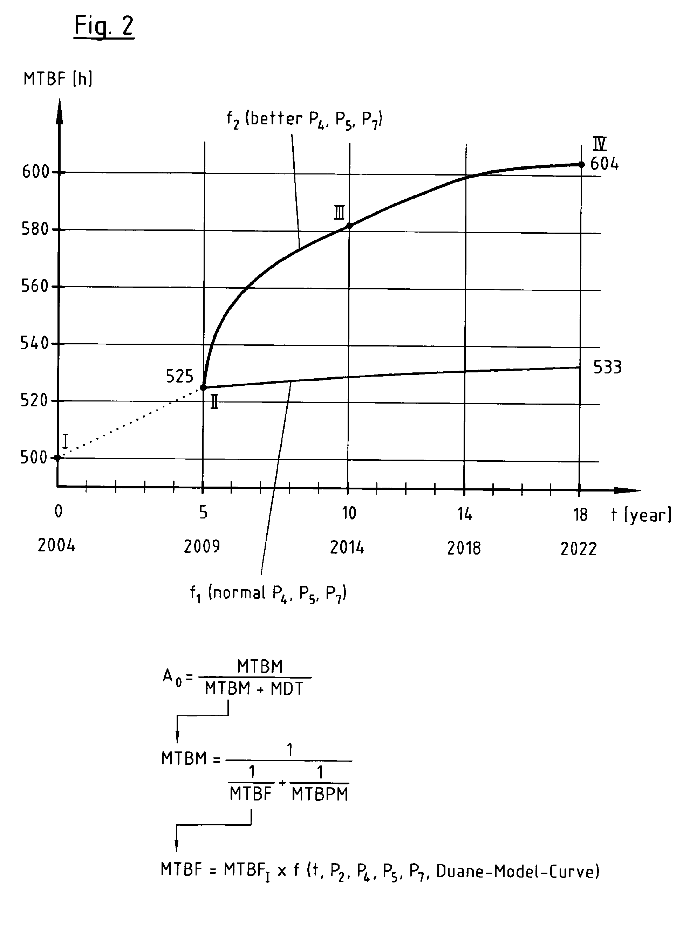

Fig. 2 illustrates that MTBF is also a function, which comprises the Duane-Model-curve under consideration of at least one real measured MTBF-value at a past point in time. The measurement of this value, together with initial one for the year 2004, allows the setting up of the actual value of $\alpha$, the reliability growth rate of the Duane Model curve due to the real support environment.

Mathematically, considering the "reliability growth" curve, the MTBF is defined as:

$$MTBF_{III} = MTBF_{II} + \left( MTBF_{II} * \left( \frac{t_{III}}{t_{II}} \right)^{\alpha(t_{II})} - MTBF_{II} \right) * \mathrm{P_{MTBF}}$$

Whereby

$MTBF_{III}$ = predictable Mean Time Between Failures in a future point III of the in service phase

$MTBF_{II}$ = Mean Time Between Failures measured for the actual point II of the in service phase $t_{II}$ = period of time between the beginning of the in service phase and point II

$t_{III}$ = period of time between the beginning of the in service phase and point III

$P_{MTBF}$ = f(P2,P4,P5,P7)

$\alpha$ = reliability growth rate for the actual point II. Statistically speaking this value can vary between 0,03, best value, to 0,01.

The MTBF-fl-function is obtained with normal values for P2, P4, P5 and P7. The $P_{MTBF}$-value is equal to 0,5. The reliability growth rate-value is also normal and equal to 0,02. At the beginning of the in service phase the theoretical $MTBF_I$ value, not yet calculated with performance parameters, is equal to 500 hrs. At the end of the in service time, after 18 years, the MTBF is increased from the initial value of 500 hrs to 533 hrs because of the reliability growth curve.

Starting from 2009 (point II) with a better reliability growth rate equal to 0,03 and better performance parameters P2, P4, P5, P7 with $P_{MTBF}$ equal to 0,9 signifies following the f2-curve from this point II. The real achievable $MTBF_{III}$ - value is then equal to 582 hrs on 2014. The $MTBF_{IV}$ - value is 604 hrs at the end of the in service phase on 2022.

The calculation of the predictable MTBF-value of point III is necessary to determine the most likely operational availability at this future point in time considering the influence of the real support environment on MTBF, especially for the support activities measured with the performance parameters P2, P4, P5 and P7.

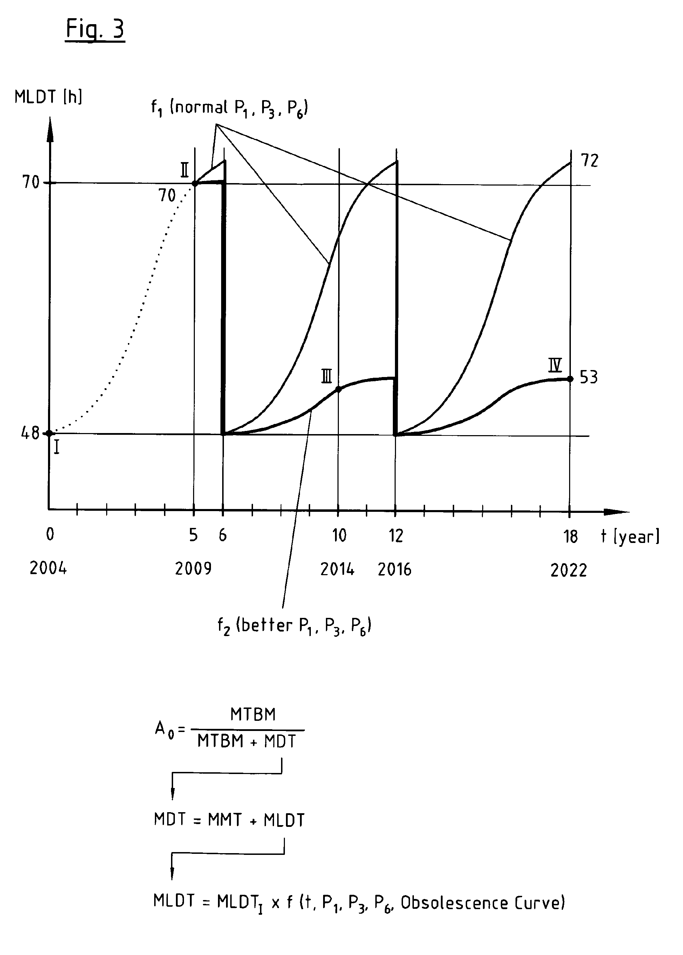

Fig. 3 illustrates that MLDT is also a function which considers the probability of obsolescence, concerning mainly electronic items in every time segment within the in service phase, in which the weapon system is upgraded.

Mathematically, considering the obsolescence curve, the MLDT is defined as:

$$MLDT_{III} = MLDT_1 * [1 + f(t_x) * (1 - P_{MLDT})]$$

Whereby $f(t_x) = 1 - e^{\frac{t_x^2}{(MTBU^2 / \ln 0,01)}}$, obsolescence curve (% of obsolete items)

$t_x$ = period of time considered after the last system upgrade

MTBU = Mean Time Between Update, the time segment within the in service phase, in which the weapon system is upgraded to standard (the percentage of items assumed not to be obsolete after the normal life cycle for the electronic components inside the weapon system, e.g. equal to 0,01).

$MLDT_I$ = theoretical initial value of MLDT

$P_{MLDT}$ = f( $P_1$, $P_3$, $P_6$)

The MTBU is equal to 6 years. This period is supposed to be the normal life cycle for an electronic item.

The function f1 shows that in the beginning of each time segment the MLDT is equal to 48 h. At the end of each time segment the MLDT-value is equal to 72 hrs due to the incoming obsolescence of several items and to the no optimal management of services activities regarding P1, P3, and P6. These support activities mitigate the obsolescence effects. In this example $P_{MLDT}$ is equal to 0,5. The obsolescence effects reduce the probability of getting the spares from the original depot.

The function f2, starting in 2009 at point II, is obtained through better values of the performance parameters P1, P3, and P6, whereby $P_{MLDT}$ is equal to 0,9. The $MLDT_{IV}$-value is 53 hrs at the end of the in service phase in 2022.

The calculation of the predictable MLDT-value of point III is necessary to determine the most likely operational availability at this future point in time considering the influence of the real support environment on MLDT, especially for the support activities measured with the performance parameters P1, P3 and P6.

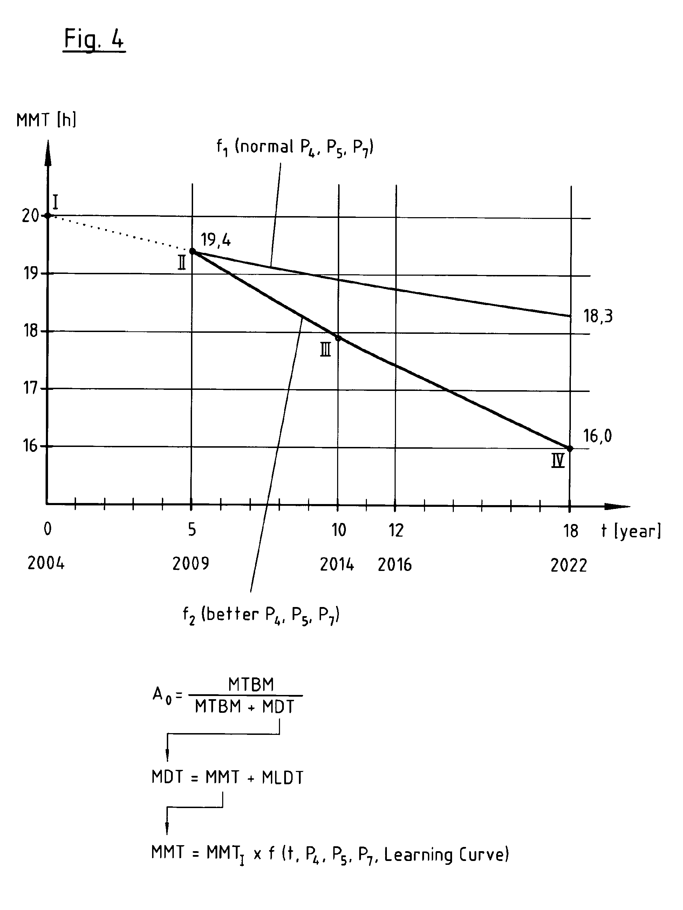

Fig. 4 illustrates that MMT is also a function, which comprises the learning curve under consideration of at least one real measured MMT-value at point II. The measurement of this value, together with the initial one for the year 2004, allows setting up of the actual value of β (learning percentage) due to the real support environment.

Mathematically, considering the learning curve, the MMT is defined as:

$$MMT_{III} = MMT_{II} - (MMT_{II} - MMT_{II} * n^{-\log_2 \beta(t_x)}) * P_{MMT}$$

Whereby

$MMT_{III}$ = predictable Mean Maintenance Time in a future point III of the in service phase $MMT_{II}$ = Mean Maintenance Time measured for the actual point II of the in service time

$t_x$ = utilization hours between the point II and point III

n = number of maintenance cycles per maintenance significant item = 1 + (*tx* / *MTBF*). For this example a number of maintenance significant items equal to 400 have been utilised.

$P_{MMT}$ = f(P4,P5,P7)

β = learning percentage. Statistically speaking this value can vary between 0,7, best value, to 0,9.

The MMT-f1-function is obtained with normal values for the learning percentage, which is equal to 0,8. The values of the performance parameters P4, P5 and P7 are also normal, whereby $P_{MMT}$ is equal to 0,5. At beginning of the in service phase, the theoretical $MMT_I$ value, not yet calculated with performance parameters, is equal to 20 hrs.

At the end of the in service support phase, after 18 years, the MMT-f1-value decreases to 18,3 hrs because of the learning curve applied to the maintainers.

Starting from 2009 with a better learning percentage equal to 0,7 and better performance parameters P4, P5 and P7 with $P_{MTBF}$ equal to 0,9 signifies following the f2-curve from this point II. The real achievable $MMT_{III}$ - value is then equal to 17,9 hrs in 2014. The $MMT_{IV}$ - value is 16 hrs at the end of the in service support phase in 2022.

The calculation of the predictable MMT-value of point III is necessary to determine the most likely operational availability at this future point in time considering the influence of the real support environment on MMT, especially for the support activities measured with the performance parameters P4, P5 and P7.

Determining the performance parameter

The performance parameters measure the level of effectiveness on managing each activity in the support environment. Their value can vary between 1 (optimal) to 0 (worst case). To set up this value for a specific point in time, each activity has to be broken down in sub-activities and elementary tasks that can have an influence (directly or indirectly) on the basic metrics of the equation on Fig.1 1a. The complete achievement of all these tasks brings the value of the performance parameter equal to 1.

For example it is possible to consider the performance parameter P1, for Configuration management activities.

This parameter measures the level of effectiveness for all activities and tasks needed to have the exact configuration of the system every time. In case of a lack of, or sub-optimal management of these activities or tasks, this parameter is able to quantify and foresee the impact on the achievable MDT value and consequently on system operational availability. The hitches can be linked to the Configuration management sub-activities: identification, accounting, audit and control which are part of the support environment. These sub-activities can be broken down into a series of elementary tasks that have to be completed for all items of the weapon system. If all these tasks are successfully accomplished, this performance parameter can assume the value equal to 1. In case of a lack of, or sub-optimal management of the tasks, this parameter will assume a proportional value between 1 and 0. To set up a support environment able to run an optimal Configuration Management signifies to reduce the number of errors in configuration tasks to zero.

Discussion of the computer system and the computer readable medium

The above described method is implemented on a computer system. The computer system comprises stored computer instructions to enable the computer system to calculate the operational availability of a certain, complex weapon system. The computer system comprises a personal computer with a printer. The computer is connected with a network in order to get the data regarding the weapon system and the reliability, maintainability and supportability performance parameters P1 to P7. The computer system is installed with Microsoft-Excel®. A computer-readable medium stores the computer instructions for instructing a computer system to calculate the operational availability of a certain, complex weapon system according to the above described method. The programme can be a Microsoft-Excel®-Programme.

**Claims**

1. Computer implemented method for predicting the operational availability of a certain, complex weapon system in the in service support phase, comprising the step of predicting the operational availability as function of reliability, maintainability and supportability, with the following formula:

$$A_o = \frac{MTBM}{MTBM + MDT}$$

whereby
$A_o$ = Operational Availability,
MTBM = Mean Time Between Maintenance, including all corrective and preventive maintenance,
MDT = Mean Down Time, which is the actual time to perform maintenance and, in addition, any delay in getting the required personnel, parts and/or number of spares on hand,
whereby
MDT = MLDT + MMT
whereby
MMT = Mean Maintenance Time,
MLDT = Mean Logistic Down Time,
whereby

$$MTBM = \frac{1}{(1/MTBF) + (1/MTBPM)}$$

whereby
MTBF = Mean Time Between Failures,
MTBPM = Mean Time Between Preventive Maintenance **characterised by**
calculating the operational availability at a future point in time through the usage of reliability, maintainability and supportability parameters P1, P2, P3, P4, P5, P6 and P7,
whereby

- P1 is a Configuration Management performance parameter,
- P2 is a Technical Events-Monitoring performance parameter,
- P3 is a Supply chain performance parameter,
- P4 is a Maintenance activities performance parameter,
- P5 is a Technical Documentation Management performance parameter,
- P6 is a Obsolescence Management performance parameter,
- P7 is a Training activities performance parameter,

whereby
each performance-parameter varies over time during the in service support phase of the weapon system and is linked to the real support environment in which the weapon system has to operate,
whereby

- MMT is a function of at least P4, P5 and P7,
- MLDT is a function of at least P1, P3 and P6,
- MTBF is a function of at least P2, P4, P5 and P7.

**2.** Computer implemented method of claim 1,
**characterised in that**
MTBF is also a function, which comprises the Duane-Model-curve under consideration of at least one real measured MTBF-value at a past point in time.

**3.** Computer implemented method of claim 1 or 2,
**characterised in that**
MLDT is also a function which considers the probability of obsolescence, concerning mainly electronic items in every time segment within the in service support phase, in which the weapon system is upgraded.

**4.** Computer implemented method of one of the claims 1 to 3,
**characterised in that**
MMT is also a function, which comprises the learning curve under consideration of at least one real measured MMT-value at a past point in time.

**5.** Computer system with stored computer instructions according to the method of one of the claims 1 to 4 for instructing the computer system to calculate the operational availability of a certain, complex weapon system.

**6.** A computer-readable medium storing computer instructions according to the method of one of the claims 1 to 4 for instructing a computer system to calculate the operational availability of a certain, complex weapon system.

## Fig. 1

$A_0 = f(t, P_1, .... P_7)$

$P_1$ = Configuration

$P_2$ = Technical Event

$P_3$ = Supply Chain

$P_4$ = Maintenance

$P_5$ = Documentation

$P_6$ = Obsolescence

$P_7$ = Training

## Fig. 1a

$$A_0 = \frac{MTBM}{MTBM + MDT}$$

$$MTBM = \frac{1}{\dfrac{1}{MTBF} + \dfrac{1}{MTBPM}} \qquad MDT = MLDT + MMT$$

| Performance-Parameter | MTBF | MLDT | MMT |
|---|---|---|---|
| $P_1$ (Configuration) | | X | |
| $P_2$ (Technical Event) | X | | |
| $P_3$ (Supply Chain) | | X | |
| $P_4$ (Maintenance) | X | | X |
| $P_5$ (Documentation) | X | | X |
| $P_6$ (Obsolescence) | | X | |
| $P_7$ (Training) | X | | X |

## Fig. 2

$$A_0 = \frac{MTBM}{MTBM + MDT}$$

$$MTBM = \frac{1}{\frac{1}{MTBF} + \frac{1}{MTBPM}}$$

$$MTBF = MTBF_I \times f\,(t, P_2, P_4, P_5, P_7, \text{Duane-Model-Curve})$$

## Fig. 3

$$A_0 = \frac{MTBM}{MTBM + MDT}$$

$$MDT = MMT + MLDT$$

$$MLDT = MLDT_I \times f(t, P_1, P_3, P_6, \text{Obsolescence Curve})$$

## Fig. 4

MMT [h]

f$_1$ (normal P$_4$, P$_5$, P$_7$)

I

20

19,4

II

19

18,3

18

III

17

16,0

16

IV

0          5              10    12                    18    t [year]

2004     2009           2014  2016                 2022

f$_2$ (better P$_4$, P$_5$, P$_7$)

$$A_0 = \frac{MTBM}{MTBM + MDT}$$

$$MDT = MMT + MLDT$$

$$MMT = MMT_I \times f\ (t, P_4, P_5, P_7, Learning\ Curve)$$

16

**EUROPEAN SEARCH REPORT**

Europäisches
Patentamt
European
Patent Office
Office européen
des brevets

Application Number

EP 09 00 7119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 The technical aspects identified in the present application (Art. 92 EPC) are considered part of common general knowledge. Due to their notoriety no documentary evidence is found to be required. * the whole document * ----- | 1-6 | INV.<br>G06Q10/00 |
| | | | **TECHNICAL FIELDS SEARCHED (IPC)**<br>G06Q |

The present search report has been drawn up for all claims

| Place of search | Date of completion of the search | Examiner |
|---|---|---|
| The Hague | 18 September 2009 | Lutz, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080082230 A1
- US 20050177353 A1
- US 20070035901 A1
- EP 1959325 A2
- EP 1160712 A2

### Non-patent literature cited in the description

- Operational Availability Handbook. 15 May 2004